(19) Europäisches Patentamt
European Patent Office
Office européen des brevets

(11) **EP 4 726 616 A1**

(12) **EUROPEAN PATENT APPLICATION**
published in accordance with Art. 153(4) EPC

(43) Date of publication:
**15.04.2026 Bulletin 2026/16**

(21) Application number: **24868173.6**

(22) Date of filing: **10.09.2024**

(51) International Patent Classification (IPC):
**G06Q 10/04** (2023.01)   **G06Q 50/04** (2012.01)
**C21B 7/00** (2006.01)   **C21C 5/30** (2006.01)

(52) Cooperative Patent Classification (CPC):
**G06Q 10/04; C21B 7/00; C21C 5/30; G06Q 50/04;**
**Y02P 90/30**

(86) International application number:
**PCT/JP2024/032431**

(87) International publication number:
**WO 2025/063096 (27.03.2025 Gazette 2025/13)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **21.09.2023 JP 2023156551**

(71) Applicant: **JFE Steel Corporation**
**Tokyo, 100-0011 (JP)**

(72) Inventor: **OGAWA Naotaka**
**Tokyo 100-0011 (JP)**

(74) Representative: **Scott, Stephen John**
**YUJA IP LAW**
**East Coast House**
**25 Skeldergate**
**York YO1 6DH (GB)**

(54) **IRONWORKS OPERATION ASSISTANCE METHOD, OPERATION ASSISTANCE DEVICE, DISPLAY DEVICE, AND OPERATION ASSISTANCE PROGRAM**

(57) A method of supporting operation is to be executed by an information processing apparatus and to be used in a steelworks including a blast furnace division, a coke division, and an energy division. The method includes inputting data on blast furnace operation specifications that have an effect on the energy division and data on a coke amount that has an effect on the energy division into a learning model, estimating a total cost using the learning model, based on the inputted data on the blast furnace operation specifications and the inputted data on the coke amount, and outputting the estimated total cost. The learning model is a model trained using performance data including performance values of blast furnace operation specifications, coke amount, and total cost.

*FIG. 2*

```
                    Start

Train the learning model using performance data          S100

Determine blast furnace operation specifications,
coke amount, and pig iron ratio based on preconditions   S110

Input data on the blast furnace operation specifications,
coke amount, and pig iron ratio into the learning model  S120

Estimate total cost of blast furnace division,
steelmaking division, coke division, and energy division S130

Output estimated total cost                              S140

                    End
```

**Description**

TECHNICAL FIELD

The present disclosure relates to a method of supporting operation, an operation support apparatus, a display apparatus, and an operation support program for supporting operations in steelworks.

BACKGROUND

Conventional techniques for supporting operations in steelworks are known. For example, Patent Literature (PTL) 1 describes a method of determining the conditions that minimize costs by performing optimization processing using the total cost at the steelworks as an objective function, and using the operating conditions such as the crude steel production volume, the hot metal blending ratio, and the type and amount of raw materials in use as variables in a calculation model.

CITATION LIST

Patent Literature

PTL 1: JP 2005-055997 A

SUMMARY

(Technical Problem)

In actual operation, the mass and heat balance of a blast furnace, and power plant efficiency, and the like often deviate from the theoretical values derived from calculation models. Therefore, the calculation models need to be tuned each time using the most recent performance data and the like. However, it is difficult to tune the calculation models during genetic algorithm processing, which is the optimization processing method used in PTL 1. As described above, with conventional techniques, there is a risk that an optimal solution suited to actual operation may not be obtained by searching for optimization conditions based on theoretical values. Techniques to support operations in steelworks thus have room for improvement.

In view of the above circumstances, an object of the present disclosure is to improve a technique to support operations in steelworks.

(Solution to Problem)

(1) A method of supporting operation according to an embodiment of the present disclosure is a method of supporting operation, the method to be executed by an information processing apparatus and to be used in a steelworks including a blast furnace division, a coke division, and an energy division, the method comprising:

inputting data on blast furnace operation specifications that have an effect on the energy division and data on a coke amount that has an effect on the energy division into a learning model;
estimating a total cost using the learning model, based on the inputted data on the blast furnace operation specifications and the inputted data on the coke amount; and
outputting the estimated total cost, wherein
the learning model is a model trained using performance data including performance values of blast furnace operation specifications, coke amount, and total cost.

(2) A method of supporting operation according to an embodiment of the present disclosure is the method of supporting operation according to (1), wherein

the learning model includes a blast furnace division model, a coke division model, and an energy division model, and
the method comprises:

inputting data on blast furnace operation specifications that have an effect on the energy division into the blast furnace division model;

outputting B gas generation conditions and estimated values of hot metal components and hot metal temperature from the blast furnace division model, based on the inputted data on blast furnace operation specifications;

inputting data on a coke amount that has an effect on the energy division into the coke division model;

outputting C gas generation conditions from the coke division model, based on the inputted coke amount data;

inputting the B gas generation conditions and the C gas generation conditions into the energy division model, and estimating the total cost based on the inputted B gas generation conditions and the inputted C gas generation conditions, using the energy division model; and

outputting the estimated total cost.

(3) A method of supporting operation according to an embodiment of the present disclosure is the method of supporting operation according to (2), wherein

the steelworks further includes a steelmaking division, the learning model further includes a steelmaking division model, and the method further comprises:

inputting an estimated value of hot metal components, an estimated value of hot metal temperature, and a pig iron ratio into the steelmaking division model to determine LD gas generation conditions of the steelmaking division; and

inputting the B gas generation conditions, the LD gas generation conditions, and the C gas generation conditions into the energy division model and outputting the total cost from the energy division model based on the inputted B gas generation conditions, the inputted LD gas generation conditions, and the inputted C gas generation conditions.

(4) A method of supporting operation according to an embodiment of the present disclosure is the method of supporting operation according to (3), wherein

the pig iron ratio is determined based on a crude steel amount, a type of steel, and a main unit price.

(5) A method of supporting operation according to an embodiment of the present disclosure is the method of supporting operation according to any one of (1) to (4), wherein

the blast furnace division includes a plurality of blast furnaces,

a total hot metal amount is distributed to the blast furnaces as a hot metal amount, based on an upper and lower limit of productivity for each blast furnace, and

the data on the blast furnace operation specifications is determined for each blast furnace, based on the distributed hot metal amount.

(6) A method of supporting operation according to an embodiment of the present disclosure is the method of supporting operation according to (3), wherein

the learning model further estimates carbon dioxide emissions of the blast furnace division, the steelmaking division, the coke division, and the energy division based on the inputted data on the blast furnace operation specifications, the coke amount, and the pig iron ratio, and

outputs the estimated carbon dioxide emissions.

(7) A method of supporting operation according to an embodiment of the present disclosure is the method of supporting operation according to any one of (1) to (6), wherein

the total cost includes a cost equivalent to carbon dioxide emissions.

(8) A method of supporting operation according to an embodiment of the present disclosure is the method of supporting operation according to any one of (1) to (7), wherein

the blast furnace operation specifications that have an effect on the energy division include reducing agent specifications and blast specifications.

(9) A method of supporting operation according to an embodiment of the present disclosure is the method of supporting operation according to (8), wherein

the reducing agent specifications include a coke rate and a pulverized coal rate, and

the blast specifications include blast moisture, blast temperature, and blast oxygen concentration.

(10) A method of supporting operation according to an embodiment of the present disclosure is the method of supporting operation according to (9), wherein
the reducing agent specifications include a composition and a carbon content of coke.

(11) A method of supporting operation according to an embodiment of the present disclosure is the method of supporting operation according to (1), comprising

inputting data on a predetermined range of blast furnace operation specifications into the learning model, and estimating the total cost of the blast furnace division, the coke division, and the energy division corresponding to each input; and
outputting a plurality of operation data candidates based on the estimated total cost.

(12) A method of supporting operation according to an embodiment of the present disclosure is the method of supporting operation according to (11), wherein
the total cost pertaining to the plurality of operation data candidates satisfies a predetermined standard.

(13) A method of supporting operation according to an embodiment of the present disclosure is the method of supporting operation according to (11) or (12), wherein
the plurality of operation data candidates satisfies a predetermined constraint.

(14) A method of supporting operation according to an embodiment of the present disclosure is the method of supporting operation according to (13), wherein
the predetermined constraint includes a constraint on the coke amount.

(15) A method of supporting operation according to an embodiment of the present disclosure is the method of supporting operation according to any one of (1) to (14), wherein
the coke amount includes a coke production amount and a coke inventory amount in the coke division.

(16) A method of supporting operation according to an embodiment of the present disclosure is the method of supporting operation according to (15), wherein
the coke inventory amount is restored by reducing a coke rate.

(17) A method of supporting operation according to an embodiment of the present disclosure is the method of supporting operation according to (15) or (16), wherein
the coke inventory amount is restored by increasing the coke production amount.

(18) A method of supporting operation according to an embodiment of the present disclosure is the method of supporting operation according to (15), wherein
in a period including a first period and a second period in which a tapping amount in the blast furnace division is greater than in the first period, the coke inventory amount is restored by reducing a coke rate in the first period and increasing a coke production amount in the second period.

(19) A method of supporting operation according to an embodiment of the present disclosure is the method of supporting operation according to (15), wherein
a coke rate is increased in a case in which a cost of increasing the coke rate to adjust the coke inventory amount is less than a cost of decreasing a coke production amount.

(20) A method of supporting operation according to an embodiment of the present disclosure is the method of supporting operation according to (15), wherein
in a case in which the coke inventory amount cannot be restored by reducing a coke rate and increasing a coke production amount, coke is transported from another steelworks to restore the coke inventory amount.

(21) A method of supporting operation according to an embodiment of the present disclosure is the method of supporting operation according to (20), wherein

the other steelworks includes a first steelworks and a second steelworks, and
even in a case in which a cost of transporting coke from the first steelworks is higher than a cost of transporting coke from the second steelworks, coke is transported from the first steelworks to restore the coke inventory in a case in which a cost associated with energy supply and demand within the first steelworks is lower than a cost associated with energy supply and demand within the second steelworks.

(22) An operation support apparatus according to an embodiment of the present disclosure is

an operation support apparatus in a steelworks including a blast furnace division, a coke division, and an energy division, the operation support apparatus comprising a controller, wherein
the controller is configured to:

input data on blast furnace operation specifications that have an effect on the energy division and data on a coke amount that has an effect on the energy division into a learning model pertaining to the steelworks; estimate a total cost using the learning model, based on the inputted data on the blast furnace operation specifications and the inputted data on the coke amount; and

output the estimated total cost, wherein

the learning model is a model trained using performance data including performance values of blast furnace operation specifications, coke amount, and total cost.

(23) A display apparatus according to an embodiment of the present disclosure is

a display apparatus configured to display an output of an operation support apparatus comprising a controller in a steelworks including a blast furnace division, a coke division, and an energy division, wherein

the display apparatus is configured to display a total cost estimated by the controller of the operation support apparatus using a learning model pertaining to the steelworks, based on data on blast furnace operation specifications that have an effect on the energy division and data on a coke amount that has an effect on the energy division, and

the learning model is a model trained using performance data including performance values of blast furnace operation specifications, coke amount, and total cost.

(24) A display apparatus according to an embodiment of the present disclosure is the display apparatus according to (23), wherein

based on the total cost of the blast furnace division, the coke division, and the energy division estimated in correspondence with each input, into the learning model, of data on blast furnace operation specifications within a predetermined range, the display apparatus is configured to filter a plurality of operation data candidates and display the filtered operation data candidates.

(25) An operation support program according to an embodiment of the present disclosure is

an operation support program, to be executed by an information processing apparatus, for a steelworks including a blast furnace division, a coke division, and an energy division, the program being configured to cause a computer to execute operations comprising:

inputting data on blast furnace operation specifications that have an effect on the energy division and data on a coke amount that has an effect on the energy division into a learning model pertaining to the steelworks;

estimating a total cost using the learning model, based on the inputted data on the blast furnace operation specifications and the inputted data on the coke amount; and

outputting the estimated total cost, wherein

the learning model is a model trained using performance data including performance values of blast furnace operation specifications, coke amount, and total cost.

(Advantageous Effect)

According to an embodiment of the present disclosure, techniques for supporting operations in steelworks can be improved.

BRIEF DESCRIPTION OF THE DRAWINGS

In the accompanying drawings:

FIG. 1 is a block diagram illustrating a schematic configuration of an operation support apparatus according to an embodiment of the present disclosure;

FIG. 2 is a flowchart illustrating operations of the operation support apparatus according to an embodiment of the present disclosure;

FIG. 3 is a diagram illustrating a configuration of a learning model according to an embodiment of the present disclosure;

FIG. 4 is a flowchart illustrating operations of the operation support apparatus according to an embodiment of the present disclosure;

FIG. 5 illustrates case study results for six different operating conditions;

FIG. 6 illustrates case study results under different preconditions; and

FIG. 7 is a flowchart illustrating operations of the operation support apparatus when the steelmaking division model is omitted.

DETAILED DESCRIPTION

Hereinafter, an operation support technique for a steelworks according to an embodiment of the present disclosure will be described with reference to the drawings.

In each drawing, identical or equivalent parts are labeled with the same reference numeral. In the description of the present embodiment, a description of identical or equivalent parts will be omitted or simplified as appropriate.

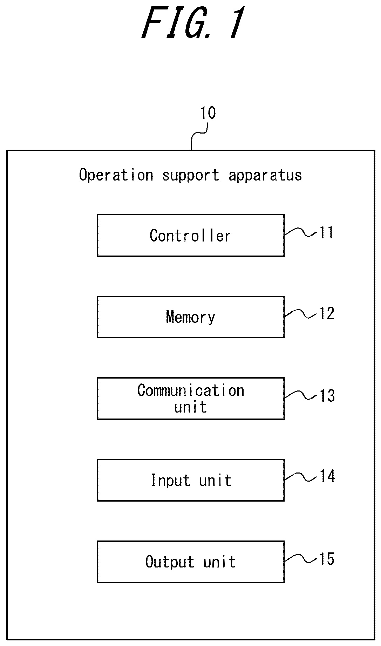

An outline and configuration of an operation support technique for a steelworks according to the present embodiment will be described with reference to FIG. 1. The operation support technique for a steelworks according to the present embodiment is executed by an operation support apparatus 10. The operation support apparatus 10 is also called an information processing apparatus. Such a support method is used, for example, in a steelworks having a blast furnace division, a steelmaking division, a coke division, and an energy division. Hereinafter, the support technique according to the present embodiment will be described as being used in a steelworks having a blast furnace division, a steelmaking division, a coke division, and an energy division.

First, an outline of the present embodiment will be described, and details will be described later. Generally, in a steelworks, a production plan is prepared that includes the tapping amount of steel, the tapping amount of pig iron, the amount of coke produced, and the like based on the demand for steel products. The production plan is prepared for each plant with the aim of continuing production activities without excess or shortage. In addition, the energy division, which manages all energy sources, creates a supply and demand plan to ensure that the necessary utilities are supplied to each plant without shortages. Here, utilities include gas, electricity, steam, water, compressed air, and the like. An operation plan is created so that each division, including the energy division, not only implements a production plan but also manages costs from the perspective of minimizing production costs. Specifically, under conditions that satisfy the production plan, an operation plan is created to optimize a wide variety of operating conditions, such as the type and amount of raw materials used, the type and amount of utilities used, and equipment operating conditions, and to minimize production costs. At steelworks, combustible gases (B gas, C gas, and LD gas) produced as by-products in blast furnaces, coke ovens, and converters are used within the plant either directly or as a mixed gas (M gas), and any surplus is used in a private power generation facility managed by the energy division. In the private power generation facility, the by-product gas and some amount of purchased fuel are combusted to generate combustion exhaust gas, which is then subjected to heat exchange with pure water or the like to generate steam. The steam is then used to generate electricity in a steam turbine. This process also involves extracting the necessary amount of steam for the steelworks, i.e., steam extraction. From the above, the supply and demand management of each utility managed by the energy division, particularly gas, electricity, and steam, is deeply related not only to the conditions of energy equipment such as turbines, but also to the operating conditions managed by each plant, especially the conditions for generating by-product gases. However, supply and demand plans for gas, electricity, and steam are generally prepared based on a detailed operation plan for each plant, and it is difficult to say that the circumstances related to cost in the energy division are fully taken into consideration in the operation plan. Therefore, the result of aggregating the optimal costs for each division does not necessarily represent the optimal cost for the entire steelworks. The operation support technique for steelworks according to the present embodiment thus aims to provide a comprehensive energy simulation technique, pertaining to blast furnaces, steelmaking, and coke, that enables more accurate cost management.

When operating a blast furnace, first, the operating conditions are determined using a model constructed from data on mass balance and heat balance. However, in actual operation, the state of the blast furnace or the surrounding environment changes on a daily basis, causing a discrepancy between the theoretical values calculated from the model and the performance data obtained from actual operation. In the present embodiment, in order to control this discrepancy, machine learning is performed based on data from actual operations, and the model is corrected.

Specifically, in the operation support technique for a steelworks according to the present embodiment, the operation support apparatus 10 uses a physical model pertaining to the steelworks to perform estimation processing required for operation support in the steelworks. The physical model pertaining to the steelworks is also called a learning model. The learning model takes data on blast furnace operation specifications as input and costs of the blast furnace division, steelmaking division, coke division, and energy division as output. The costs of the blast furnace division, steelmaking division, coke division, and energy division are also referred to as the total cost. Such a learning model is trained using performance data including data on the blast furnace operation specifications and performance values of the total cost as training data. In the present embodiment, the operation support apparatus 10 inputs data on blast furnace operation specifications that have an effect on the energy division into the learning model. The operation support apparatus 10 also estimates the total cost using the learning model, based on the inputted data on the blast furnace operation specifications. The operation support apparatus 10 also outputs the estimated total cost.

As described above, according to the present embodiment, the operation support apparatus 10 inputs data on blast furnace operation specifications that have an effect on the energy division into the learning model and outputs the total cost. In addition, the learning model is trained using performance data as training data. That is, in the present embodiment, a feedback function based on performance data is provided in order to correct the discrepancy between the actual operation and the theoretical values derived from the model. As a result, in the present embodiment, the accuracy of estimating the total cost in the steelworks is improved. In other words, according to the present embodiment, it is possible to provide a blast furnace and energy comprehensive simulation technique that enables more accurate cost management, and to improve techniques for supporting operations at steelworks.

Here, the data on blast furnace operation specifications that have an effect on the energy division include, for example, reducing agent conditions and blast conditions. There are many different operating conditions that affect the combined cost of the blast furnace division and the energy division. For example, in a blast furnace, reducing agent conditions such as coke rate and pulverized coal rate, which are closely related to B gas generation conditions, and blast conditions such as blast moisture, blast temperature, and blast oxygen concentration also have a significant effect on the total cost. In the present embodiment, by considering the reducing agent conditions and the blast conditions as variables, more accurate cost management and the creation of a highly feasible operation plan are achieved.

Next, each component of the operation support apparatus 10 will be described in detail.

The operation support apparatus 10 is any apparatus used by a user, including, for example, a manager or person in charge at a steelworks. For example, a general-purpose electronic device or a dedicated electronic device can be used as the operation support apparatus 10. As illustrated in FIG. 1, the operation support apparatus 10 includes a controller 11, a memory 12, a communication unit 13, an input unit 14, and an output unit 15.

At least one processor, at least one dedicated circuit, or a combination thereof is included in the controller 11. The processor is a general-purpose processor such as a central processing unit (CPU) or a graphics processing unit (GPU), or a dedicated processor that is dedicated to specific processing. Examples of dedicated circuits include a field-programmable gate array (FPGA) and an application specific integrated circuit (ASIC). The controller 11 controls each component of the operation support apparatus 10 and executes processes related to the operation of the operation support apparatus 10.

At least one semiconductor memory, at least one magnetic memory, at least one optical memory, or a combination of at least two of these is included in the memory 12. The semiconductor memory is, for example, a random access memory (RAM) or a read only memory (ROM). The RAM is, for example, static random access memory (SRAM) or dynamic random access memory (DRAM). "EEPROM" is an abbreviation for electrically erasable programmable read-only memory. The memory 12 functions as, for example, a main storage device, an auxiliary storage device, or a cache memory. The memory 12 stores data to be used for operations of the operation support apparatus 10 and data obtained by the operations of the operation support apparatus 10. For example, the memory 12 stores the learning model. The learning model may be stored in an external device different from the operation support apparatus 10. In this case, the operation support apparatus 10 uses the learning model by accessing, via the communication unit 13, the external device that stores the learning model.

The communication unit 13 includes at least one external interface for communication. The interface for communication may be either a wired or wireless interface. In the case of wired communication, the interface for communication is, for example, a local area network (LAN) interface or a Universal Serial Bus (USB). In the case of wireless communication, the interface for communication is, for example, an interface compatible with mobile communication standards such as Long Term Evolution (LTE), 4th generation (4G), or 5th generation (5G), or an interface compatible with short-range wireless communication such as Bluetooth® (Bluetooth is a registered trademark in Japan, other countries, or both). The communication unit 13 receives data to be used for the operations of the operation support apparatus 10 and transmits data obtained by the operations of operation support apparatus 10.

The input unit 14 includes at least one interface for input. The interface for input may be, for example, physical keys, capacitance keys, or a pointing device. The interface for input may be a touch screen that is integrated with the display. The interface for input may be, for example, a microphone that accepts audio input, a camera that accepts gesture input, or the like. The input unit 14 accepts operations for inputting data used in the operations of the operation support apparatus 10. The input unit 14 may be connected to the operation support apparatus 10 as an external input device instead of being provided in the operation support apparatus 10. The connection method may be any method such as Universal Serial Bus (USB), High-Definition Multimedia Interface (HDMI®) (HDMI is a registered trademark in Japan, other countries, or both), or Bluetooth®.

The output unit 15 includes at least one interface for output. The interface for output is, for example, a display that outputs information as images, or a speaker that outputs information in the form of audio. The display is, for example, a liquid crystal display (LCD) or an organic electro luminescent (EL) display. The output unit 15 displays data obtained by the operation of the operation support apparatus 10. The output unit 15 may be connected to the operation support apparatus 10 as an external output device instead of being provided in the operation support apparatus 10. The connection method may be any method such as USB, HDMI®, or Bluetooth®.

The functions of the operation support apparatus 10 are realized by executing a program according to the present embodiment on a processor corresponding to the operation support apparatus 10. That is, the functions of the operation support apparatus 10 can be realized by software. The program causes a computer to execute the operations of the operation support apparatus 10, thereby causing the computer to function as the operation support apparatus 10. That is, the computer functions as the operation support apparatus 10 by executing the operations of the operation support apparatus 10 in accordance with the program.

In the present embodiment, the program can be recorded on a computer readable recording medium. The computer readable recording medium includes a non-transitory computer readable medium, such as a magnetic recording device, an optical disk, a magneto-optical recording medium, or a semiconductor memory. The program is distributed by, for example, selling, transferring, or lending a portable recording medium, such as a digital versatile disc (DVD) or a compact disc read only memory (CD-ROM), on which the program is recorded. The program may also be distributed by storing the program in the storage of an external server and transmitting the program from the external server to other computers. The program may be provided as a program product.

Some or all of the functions of the operation support apparatus 10 may be realized by a dedicated circuit equivalent to the controller 11. That is, some or all of the functions of the operation support apparatus 10 may be realized by hardware.

(First operation example of operation support apparatus 10)

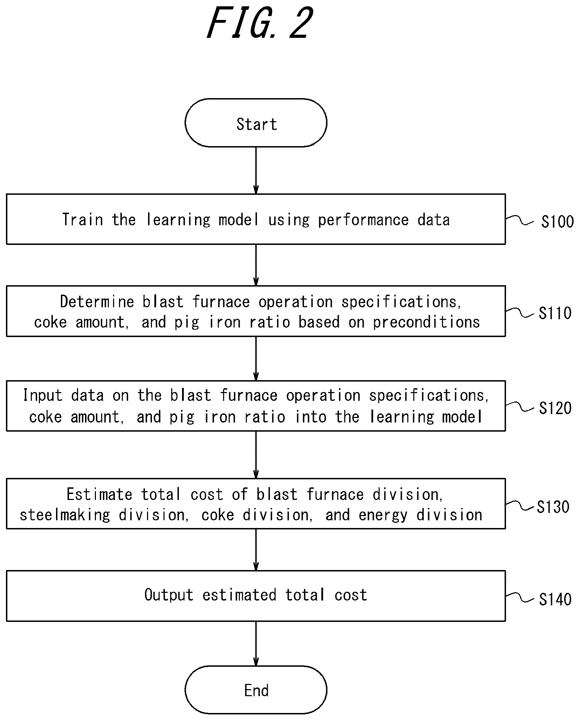

Next, a first operation example of the operation support apparatus 10 according to the present embodiment will be described. FIG. 2 is a flowchart illustrating an example of a method of supporting operation executed by the operation support apparatus 10 according to the present embodiment.

Step S100: the controller 11 of the operation support apparatus 10 trains the learning model based on performance data. Specifically, the controller 11 trains the learning model using performance data including performance values of blast furnace operation specifications, coke amount, pig iron ratio, and total cost as training data. Here, the pig iron ratio represents the ratio between the total hot metal amount and the scrap amount. As described above, a discrepancy may occur between the theoretical values calculated from the physical model and the performance data obtained from actual operation. In the present embodiment, in order to suppress this discrepancy, the learning model is trained based on data from actual operations.

In the present embodiment, the blast furnace operation specifications include reducing agent specifications and blast specifications. The reducing agent specifications include the coke rate and pulverized coal rate. The reducing agent specifications may also include the composition and carbon content of the coke. The blast specifications include the blast moisture, blast temperature, and blast oxygen concentration. All of these blast furnace operating specifications have a major effect on the energy division. In other words, these blast furnace operation specifications have a large effect on cost management in the energy division, that is, on costs in the energy division. Therefore, in the present embodiment, a learning model is adopted in which blast furnace operation specifications that have an effect on the energy division are used as input. In the present embodiment, by adopting such a learning model, the accuracy of estimating the total cost in a steelworks is improved. Hereinafter, in the present embodiment, the blast furnace operation specifications will be described as including the coke rate, the pulverized coal rate, the blast moisture, the blast temperature, and the blast oxygen concentration.

The total cost includes the main costs of the blast furnace division, the main costs of the steelmaking division, the main costs of the coke division, and the main costs of the energy division. The main costs of the blast furnace division include costs related to main raw materials and energy costs. The energy costs include costs related to reducing agents and utility costs. Utility costs are the costs of utilities required in each plant and the like. The main costs of the steelmaking division include costs related to main raw materials, costs related to auxiliary raw materials, and utility costs. The main costs in the coke division include utility costs. The main costs in the energy division include the cost of purchased fuel and the cost of buying and selling electricity. In the present embodiment, the total cost is determined by the following equation (1).

[Math. 1]

$$\begin{aligned}
\text{total cost} &= \text{main costs of the blast furnace division} + \text{main costs of the}\\
&\quad \text{steelmaking division}\\
&\quad + \text{main costs of the coke division} + \text{main costs of the energy}\\
&\quad \text{division}\\
&= (\text{main raw material cost} + \text{auxiliary raw material cost})\\
&\quad + (\text{reducing agent related costs} + \text{utility costs})\\
&\quad + (\text{fuel purchase cost} + \text{electricity trading cost})
\end{aligned}$$

$$(1)$$

The learning model is, for example, a machine learning model generated based on a multi-layer perceptron composed of an input layer, a hidden layer, and an output layer, but this example is not limiting. The learning model may be any model generated based on a machine learning algorithm such as a convolutional neural network (CNN), a recurrent neural network (RNN), or other form of deep learning. Furthermore, the learning model is not limited to models generated by machine learning. For example, the learning model may be a multiple regression model, a model based on a Kalman filter, or the like. Also, for example, the learning model may be a theoretical model constructed from data on mass balance and heat balance. Furthermore, "training" in the present embodiment includes, but is not limited to, training in machine learning algorithms. In the present embodiment, "training" includes, for example, optimization or correction of various parameters in a multiple regression model, a theoretical model, or the like.

Step S110: the controller 11 determines the blast furnace operation specifications, coke amount, and pig iron ratio based on conditions determined according to factors such as the production plan of the steelworks. Conditions determined according to factors such as the production plan of the steelworks are also called preconditions. In the present embodiment, the coke amount is the amount of coke produced in the coke division. The preconditions are set, for example, by user input. Such preconditions include the tapping amount (or productivity), coke unit price, rolling operation plan, coal market conditions, and crude oil market conditions. Specifically, the controller 11 determines the blast furnace operation specifications using, for example, a lookup table in which the tapping amount and the blast furnace operation specifications are associated with each other. In this case, the memory 12 stores such a lookup table. The controller 11 also refers to the memory 12 to determine the blast furnace operation specifications corresponding to the preconditions. The controller 11 may determine the pig iron ratio based on the crude steel amount, the type of steel, and the main unit price. The crude steel amount, type of steel, and main unit price may be included in the preconditions or may be derived from the preconditions. The crude steel amount is the amount of crude steel produced in the blast furnace. The type of steel is the type of crude steel produced in the blast furnace. The main unit price includes unit prices of coal, scrap, liquefied natural gas (LNG), and the like. The controller 11 may calculate an objective function within a search range set by user input and determine the pig iron ratio by adopting higher-level specifications including the pig iron ratio.

Step S120: the controller 11 inputs the data on the blast furnace operation specifications, coke amount, and pig iron ratio determined in step S110 into the learning model trained in step S100.

Step S130: the controller 11 estimates the total cost of the blast furnace division, the steelmaking division, the coke division, and the energy division using the learning model, based on the inputted data on the blast furnace operation specifications, the coke amount, and the pig iron ratio. In this estimation process, the above-described preconditions are used. Specifically, using the rolling operation plan, coal market conditions, and crude oil market conditions, the learning model estimates the total costs of the blast furnace division, steelmaking division, coke division, and energy division, based on the inputted data on the blast furnace operation specifications, coke amount, and pig iron ratio.

Step S140: via the output unit 15, the controller 11 outputs the total cost estimated in step S130.

Although an example in which the output of the learning model is the total cost has been described above, this example is not limiting. The learning model may further estimate carbon dioxide emissions of the blast furnace division, the steelmaking division, the coke division, and the energy division based on the inputted data on the blast furnace operation specifications, the coke amount, and the pig iron ratio. The carbon dioxide emissions include carbon dioxide emissions derived from reducing agents, carbon dioxide emissions derived from purchased fuel, and carbon dioxide emissions derived from purchased electricity. In addition, the carbon dioxide emissions from sold electricity are subtracted from the carbon dioxide emissions. That is, the carbon dioxide emissions are determined by the following equation (2), for example.

[Math. 2]

$$\begin{aligned}
\text{carbon dioxide emissions} = &\ \text{carbon dioxide emissions from reducing} \\
&\ \text{agents} \\
&+ \text{carbon dioxide emissions from purchased fuel} \\
&+ \text{carbon dioxide emissions from purchased electricity} \\
&- \text{carbon dioxide emissions from sold electricity}
\end{aligned} \qquad (2)$$

When the carbon dioxide emissions are estimated, the performance data in step S100 described above includes performance values of the carbon dioxide emissions. That is, in step S100, the controller 11 trains the learning model using performance data including performance values of blast furnace operation specifications, coke amount, pig iron ratio, total cost, and carbon dioxide emissions as training data. In step S130, the controller 11 uses the learning model to estimate the total cost of the blast furnace division, steelmaking division, coke division, and energy division, and estimate the carbon dioxide emissions, based on the inputted data on the blast furnace operation specifications. Furthermore, in step S140, the controller 11 outputs the estimated total cost and carbon dioxide emissions.

The total cost may also include a cost equivalent to carbon dioxide emissions. The cost equivalent to carbon dioxide emissions is determined by the carbon dioxide emissions and the unit price of carbon dioxide. In this case, the above preconditions include the unit price of carbon dioxide. Hereinafter, the total cost including the cost equivalent to carbon dioxide emissions will also be referred to as the total cost including carbon assessment. The total cost including carbon assessment is determined by the following equation (3), for example.
[Math. 3]

$$\begin{aligned}
&\text{total cost including carbon assessment} \\
&= \text{total cost} + \text{carbon dioxide emissions} \times \text{carbon dioxide unit price}
\end{aligned} \qquad (3)$$

The learning model has been described as a single model corresponding to a steelworks including a blast furnace division, a steelmaking division, a coke division, and an energy division, but the learning model is not limited to this. For example, the learning model may be a combination of four models: a model corresponding to the blast furnace division, i.e., a blast furnace division model, a model corresponding to the steelmaking division, i.e., a steelmaking division model, a model corresponding to the coke division, i.e., a coke division model, and a model corresponding to the energy division, i.e., an energy division model. Furthermore, the learning model may be a model that combines models that are further subdivided from the blast furnace division model, the steelmaking division model, the coke division model, and the energy division model.

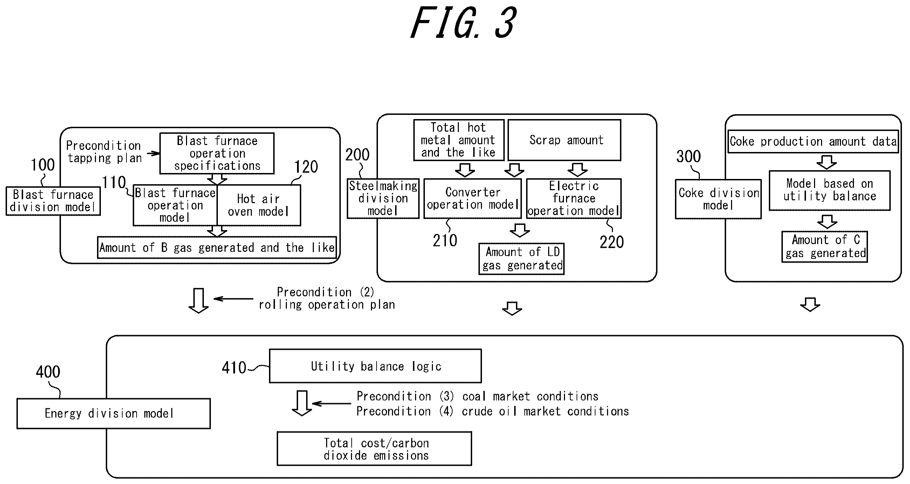

Referring to FIG. 3, an example of the configuration of a learning model is illustrated. The learning model illustrated in FIG. 3 includes a blast furnace division model 100, a steelmaking division model 200, a coke division model 300, and an energy division model 400. The blast furnace division model 100 includes a blast furnace operation model 110 and a hot air oven model 120. The blast furnace operation model 110 and the hot air oven model 120 are models based on the mass and heat balance in the blast furnace and the hot air oven, respectively. The controller 11 trains the blast furnace operation model 110 and the hot air oven model 120 using the performance data as training data. The blast furnace operation specifications based on the preconditions are inputted into the blast furnace operation model 110 and the hot air oven model 120. Such preconditions include a tapping plan. The tapping plan includes a plan for the tapping amount and the like. As described above, the controller 11 determines the blast furnace operation specifications to be inputted into the model based on the tapping plan and the lookup table. The blast furnace operation model 110 and the hot air oven model 120 output data necessary for calculating the total cost and data on the hot metal conditions, including the hot metal components and the hot metal temperature, based on the inputted blast furnace operation specifications. Such data required to calculate the total cost is used as input to the energy division model 400. The data required to calculate the total cost includes, for example, data related to B gas, which is a combustible gas produced as a by-product in a blast furnace. The data related to B gas includes the amount of B gas generated and the amount of heat per unit volume of B gas. Data on hot metal conditions, including hot metal composition and hot metal temperature, is used as input to the steelmaking division model 200.

The steelmaking division model 200 includes a converter operation model 210 and an electric furnace operation model 220. The converter operation model 210 and the electric furnace operation model 220 are models based on the mass and heat balances in the converter and the electric furnace, respectively. The controller 11 trains the converter operation model 210 and the electric furnace operation model 220 using the performance data as training data. The converter operation model 210 receives input of the total hot metal amount and scrap amount based on the preconditions, and data on the hot metal conditions including hot metal components and hot metal temperature. The scrap amount based on preconditions is inputted into the electric furnace operation model 220. The converter operation model 210 and the electric furnace operation model 220 output data necessary for calculating the total cost, based on the inputted preconditions. Such data is used as input to the energy division model 400. The data required to calculate the total cost includes, for example, data related to LD gas, which is a combustible gas produced as a by-product in the converter. The data related to the LD gas includes the amount of LD gas generated and the amount of heat per unit volume of the LD gas.

The coke division model 300 is a model based on the utility balance of the coke oven and peripheral equipment. The controller 11 trains the coke division model 300 using the performance data as training data. The coke division model 300 receives input of data on the amount of coke based on preconditions. The coke division model 300 outputs data necessary for calculating the total cost based on the inputted preconditions. Such data is used as input to the energy division model 400. The data required to calculate the total cost includes, for example, data related to C gas, which is a combustible gas produced as a by-product in a coke oven. The data related to C gas includes the amount of C gas generated and the amount of heat per unit volume of C gas.

The energy division model 400 includes utility balance logic 410. The controller 11 trains the utility balance logic 410 using the performance data as training data. The utility balance logic 410 outputs the total cost and carbon dioxide emissions based on the inputted preconditions and data related to B gas, LD gas, and C gas. Such preconditions include a rolling operation plan, coal market conditions, and crude oil market conditions. That is, the energy division model 400 takes as input the preconditions, the output of the blast furnace division model 100, the output of the steelmaking division model 200, and the output of the coke division model 300, and outputs the total cost and the carbon dioxide emissions.

(Operation example 2 of operation support apparatus 10)

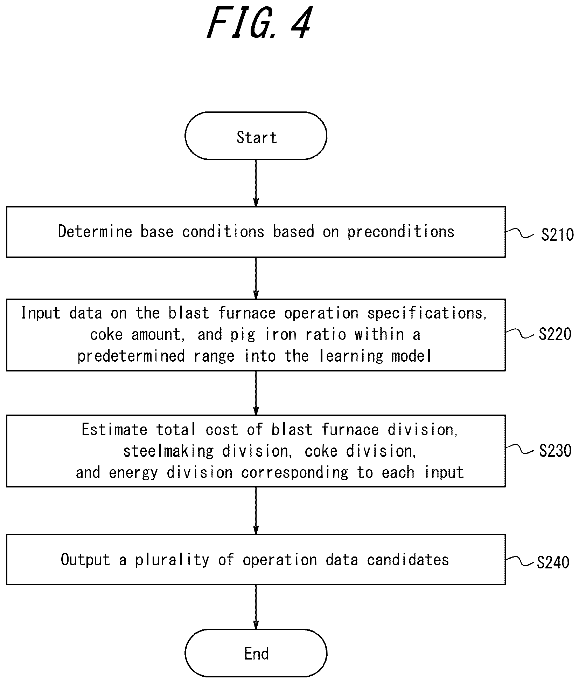

Next, a second operation example of the operation support apparatus 10 according to the present embodiment will be described. FIG. 4 is a flowchart illustrating an example of a method of supporting operation executed by the operation support apparatus 10 according to the present embodiment. Here, an example of the operation of the operation support apparatus 10 to output a plurality of candidates of operation data based on the total cost estimated by the learning model will be described. The plurality of candidates of operation data are also referred to as operation data candidates. The operation support apparatus 10 uses a learning model that has been trained by the process in step S100 of FIG. 3.

Step S210: the controller 11 of the operation support apparatus 10 determines representative values of the blast furnace operation specifications, coke amount, and pig iron ratio based on preconditions. The representative values of the blast furnace operation specifications, coke amount, and pig iron ratio are also referred to as base conditions. The preconditions are set by user input, for example. The preconditions include the tapping amount (or productivity), coke unit price, rolling operation plan, coal market conditions, and crude oil market conditions. Specifically, the controller 11 determines base conditions using, for example, a lookup table in which the tapping amount and the base conditions are associated with each other. In this case, the memory 12 stores such a lookup table. The controller 11 also determines base conditions corresponding to the preconditions by referring to the memory 12. The base conditions include the coke rate, pulverized coal rate, blast moisture, blast temperature, and blast oxygen concentration. At least a part of the base conditions may be set by manual input by the user.

Step S220: the controller 11 inputs data on the blast furnace operation specifications, coke amount, and pig iron ratio within a predetermined range into the learning model, based on the base conditions. In other words, the controller 11 inputs data on the blast furnace operation specifications, coke amount, and pig iron ratio within a predetermined range into the learning model, using the five operating factors of coke rate, pulverized coal rate, blast moisture, blast temperature, and blast oxygen concentration included in the base conditions. A predetermined range is defined for each of the five operating factors. Specifically, the predetermined range of the coke rate has a lower limit of 280 kilograms per tonne (kg/t) and an upper limit of 450 kg/t. The predetermined range of the pulverized coal rate has a lower limit of 80 kg/t and an upper limit of 260 kg/t. The predetermined range of the blast moisture has a lower limit of 5 g/Nm$^3$ and an upper limit of 70 g/Nm$^3$. The predetermined range of the blast temperature has a lower limit of 900 °C and an upper limit of 1200 °C. The predetermined range of the blast oxygen concentration has a lower limit of 0 % and an upper limit of 10 %. These predetermined ranges are determined based on the upper and lower limits of operational performance in a steady state. The predetermined ranges may also be determined based on constraints related to facility management. The predetermined range of the blast temperature, for example, is determined to be the above range from the perspective of maintaining stable function of the hot air oven, for example.

Furthermore, the controller 11 inputs all combinations of operating factors within the predetermined range into the learning model, based on a specified mesh, that is, a step amount within the predetermined range. For example, the predetermined range for the blast temperature is set to be 900 °C to 1200 °C. The mesh may be specified as 50 °C. When the predetermined range and mesh are specified in this way, 900 °C, 950 °C, ..., 1200 °C are inputted into the learning model as the blast temperature. In other words, the controller 11 performs a grid search for the five operating factors within a predetermined range for each operating factor, for example, within a search range defined by the settable upper and lower limits for each operating factor. The mesh size is determined appropriately depending on the calculation load for the grid search.

Step S230: the controller 11 uses the learning model to estimate the total cost corresponding to each input that was inputted in step S220.

Step S240: the controller 11 outputs a plurality of operation data candidates via the output unit 15, based on the total cost estimated in step S230. In other words, the controller 11 performs a search using the total cost as an objective function and outputs a plurality of operation data candidates. The plurality of operation data candidates are, for example, the top 20 sets of operation data ranked by the total cost, estimated in correspondence with each input, starting from the lowest total cost. The operation data includes the coke rate, pulverized coal rate, blast moisture, blast temperature, and blast oxygen concentration. In other words, the user can easily grasp the top 20 sets of operation data with the lowest total cost. The user can select operation data that can actually be used from among these sets of operation data.

Although an example in which the output of the learning model is the total cost has been described above, this example is not limiting. The learning model may further estimate total carbon dioxide emissions based on input data on blast furnace operation specifications. The carbon dioxide emissions are expressed by the above equation (2). In this case, in steps S220 to S240, the controller 11 performs a search using the total cost and the carbon dioxide emission amount as an objective function and thereby outputs a plurality of operation data candidates. The operation data candidates in this case are the top 20 operation data sets based on the ranking determined based on the total cost and carbon dioxide emissions estimated in correspondence with each input. The ranking determined based on the total cost and the carbon dioxide emission is determined appropriately using an evaluation value or the like based on the total cost and the carbon dioxide emission. For example, the learning model may alternatively estimate the total cost including carbon assessment. The total cost including carbon assessment is determined, for example, by the above equation (3). In this case, in steps S220 to S240, the controller 11 performs a search using the total cost including carbon assessment as an objective function and thereby outputs a plurality of operation data candidates. The plurality of operation data candidates in this case are, for example, the top 20 sets of operation data ranked by the total cost, including carbon assessment estimated in correspondence with each input, starting from the lowest total cost.

As described above, according to the present embodiment, the operation support apparatus 10 inputs data on blast furnace operation specifications, coke amount, and pig iron ratio that have an effect on the energy division into a learning model and outputs the total cost and the like. The learning model is trained based on performance data. Therefore, according to the present embodiment, it is possible to improve the accuracy of estimating the total cost and the like in a steelworks. Furthermore, according to the present embodiment, the operation support apparatus 10 inputs data on a predetermined range of blast furnace operation specifications, coke amount, and pig iron ratio, estimates the total cost corresponding to each input, and outputs a plurality of operation data candidates. Therefore, from among data on a predetermined range of blast furnace operation specifications, coke amount, and pig iron ratio, it is possible to output a plurality of operation data candidates that are desirable from the perspective of total cost or the like. In this way, according to the present embodiment, it is possible to improve techniques for supporting operations in steelworks.

A wide variety of operating conditions affect the total cost. For example, in a blast furnace, reducing agent conditions such as the coke rate and pulverized coal rate, which are closely related to the B gas generation conditions, and blast conditions such as blast moisture, blast temperature, and blast oxygen concentration also have a significant effect on the total cost and carbon dioxide emissions. According to the present embodiment, since the reducing agent conditions and the blast conditions are taken into consideration as variables, more accurate cost management is possible, and a more feasible operation plan can be created.

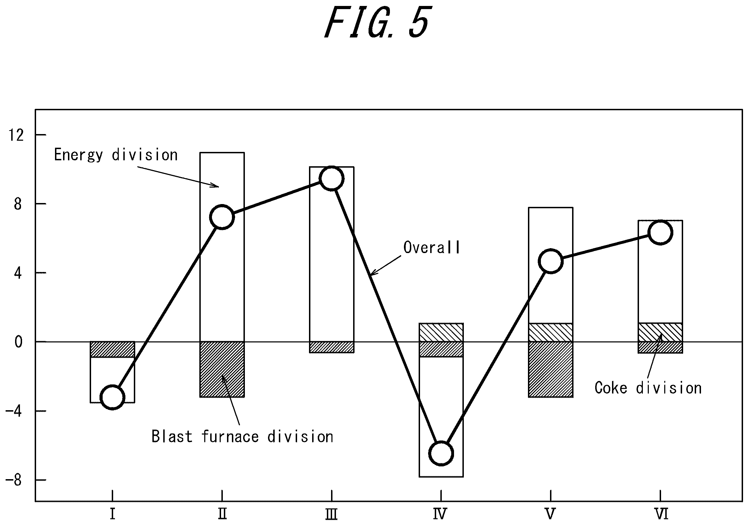

FIG. 5 illustrates the results of a case study in which test operations were carried out based on six different patterns of blast furnace operation data and coke amounts under the same preconditions and with the same pig iron ratio. The blast furnace operation specifications for the six cases are all thermally equivalent and are set by combining a plurality of parameter changes equivalent to a coke rate of 2 kg/t. In the case study results in FIG. 5, the cost benefits of the blast furnace division, coke division, and energy division are each illustrated by a bar graph. The cost benefit is the cost multiplied by -1. The total cost benefit, which is the sum of the cost benefits of the blast furnace division, coke division, and energy division, is illustrated by a line graph. The total cost benefit is the sum of the cost benefits of the blast furnace division, coke division, and energy division. As illustrated in FIG. 5, in the blast furnace division, coke division, and energy division, the cost benefits are greatest in cases III and VI for the blast furnace division, cases IV, V, and VI for the coke division, and case II for the energy division. On the other hand, case III offers the greatest total cost benefit. In this way, the case for which the cost benefit of the blast furnace division is greatest, the case for which the cost benefit of the coke division is greatest, the case for which the cost benefit of the energy division is greatest, and the case for which the total cost benefit is greatest do not necessarily coincide. In other words, it is necessary to determine the blast furnace specifications based on the total cost, not just the individual costs of the blast furnace division, coke division, and energy division. By estimating the total cost using the operation support apparatus 10 according to the present embodiment, it is possible to optimize the entire steelworks.

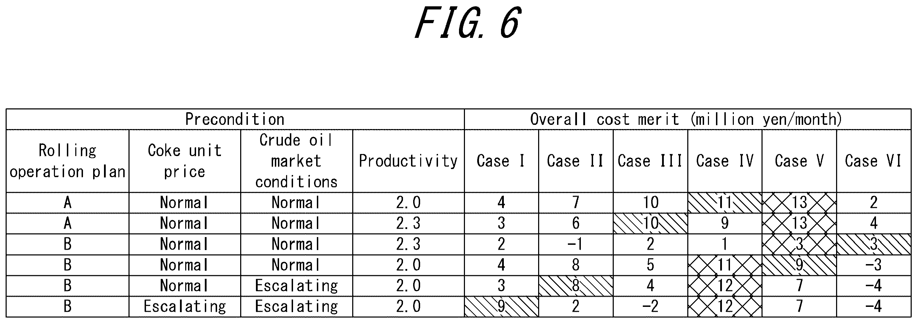

FIG. 6 illustrates the results of a case study in which test operations were carried out under different preconditions. The six cases of blast furnace operation specifications in FIG. 6 all had thermally equivalent conditions and were set by combining a plurality of specification changes equivalent to a coke rate of 2 kg/t. In other words, FIG. 6 illustrates the results of a case study in which test operations were carried out under different preconditions with the same coke amount and pig iron ratio. Rolling operation plans A and B respectively indicate a case in which all the main rolling mills are operated and a case in which none of the main rolling mills are operated. The ranges of normal and escalating unit prices are set appropriately with regard to normal and escalating coke unit prices and crude oil market conditions. In FIG. 6, the cells with the highest total cost merit and the second highest total cost merit are highlighted. As illustrated in FIG. 6, it can be seen that the case where the cost merit is maximized is different for all six types of preconditions. In other words, if the preconditions change, the total cost in the blast furnace division and energy division will need to be reassessed. According to the operation support apparatus 10 of the present embodiment, the total cost can be easily estimated, so that even if the preconditions change, recalculation related to the optimization of the entire steelworks can be performed in a timely manner.

In step S240, the plurality of operation data candidates has been described as being the top 20 operation data sets based on the total cost, but this example is not limiting. The total cost related to the plurality of operation data candidates may be operation data that meets a predetermined criterion. For example, the predetermined criterion may be a ranking-based criterion or may be that the total cost is lower than a predetermined threshold. The predetermined threshold may be a fixed value or may be determined based on the average value or the like of the total costs corresponding to the inputs searched by the grid search.

The plurality of operation data candidates may be operation data that meets a predetermined constraint. In other words, operational or equipment management constraints may be set for each of the blast furnace division, steelmaking division, coke division, and energy division, and an operation data candidate that conflicts with the constraints may be excluded at the time of ranking. Such constraints include the tuyere-outlet temperature, blast volume, and the like. For example, the lower and upper limits of the tuyere-outlet temperature may be specified as 2250 °C and 2320 °C, respectively. For example, the lower and upper limits of the blast volume may be specified as 6500 $Nm^3$/min and 7400 $Nm^3$/min, respectively. The constraints may also include a minimum amount of heavy fuel oil usage in the power generation facility. The plurality of operation data candidates may be only data that satisfy these constraints.

Among the plurality of operation data candidates outputted by the output unit 15, the controller 11 may highlight and output operation data candidates that are the same as or similar to the operating conditions of the performance data. In this way, the user can more easily select operation data that can actually be used from among the operation data candidates.

In the present embodiment, examples have been illustrated in which the learning model outputs the total cost, the total cost and carbon dioxide emissions, or the total cost including carbon assessment, but these examples are not limiting. The learning model may output the carbon dioxide emissions. In other words, the operation support apparatus 10 may estimate and output only the carbon dioxide emissions without estimating the total cost. In this case, in step S130 of the above-mentioned first operation example, the controller 11 uses the learning model to estimate the carbon dioxide emissions from the blast furnace division, steelmaking division, coke division, and energy division, based on the inputted data on the blast furnace operation specifications, coke amount, and pig iron ratio. Then, in step S140, the controller 11 outputs the estimated carbon dioxide emissions via the output unit 15. In step S230 of the above-described second operation example, the controller 11 uses the learning model to estimate the carbon dioxide emissions from the blast furnace division, steelmaking division, coke division, and energy division corresponding to each input. Then, in step S240, the controller 11 outputs a plurality of operation data candidates via the output unit 15, based on the estimated carbon dioxide emissions. In other words, in this case, the controller 11 outputs a plurality of operation data candidates by performing a search using the carbon dioxide emissions as an objective function.

In the present embodiment, the operation support apparatus 10 includes the output unit 15, and the results of calculations performed by the controller 11 of the operation support apparatus 10 are outputted by the output unit 15. However, this configuration is not limiting. For example, the technology according to the present embodiment may be implemented in a Software as a Service (SaaS) format. In this case, the operation support apparatus 10 functions as a cloud server. The operation support apparatus 10 outputs the calculation results on a display apparatus separate from the operation support apparatus 10. Such a display apparatus includes a communication unit, receives calculation results from the operation support apparatus 10 via the communication unit, and displays information such as total costs. In other words, the display apparatus displays the total cost of the blast furnace division, steelmaking division, coke division, and energy division as estimated by the controller 11, provided in the operation support apparatus 10, using a learning model pertaining to the steelworks, based on data on the blast furnace operation specifications, coke amount, and pig iron ratio, which have an effect on the energy division. The display apparatus also displays the carbon dioxide emissions of the blast furnace division, steelmaking division, coke division, and energy division as estimated by the controller 11, provided in the operation support apparatus 10, using a learning model pertaining to the steelworks, based on data on the blast furnace operation specifications, coke amount, and pig iron ratio, which have an effect on the energy division. The above calculation results can be requested from the operation support apparatus 10 by any method. For example, the display apparatus may include an input unit that accepts input from a user and may transmit a request for the calculation results to the operation support apparatus 10 based on the content of input accepted by the input unit.

This apparatus is an apparatus for outputting the blast furnace operating specifications, coke amount, and pig iron ratio in order to optimize the total cost and carbon dioxide emissions of the blast furnace division, steelmaking division, coke division, and energy division combined. The present embodiment is intended for blast furnace, steelmaking, and coke operators to consider and implement changes to the blast furnace operating specifications, coke amount, and pig iron ratio accordingly, and is therefore different from an apparatus that optimizes the supply and demand of gas, steam, electricity, or the like only within a specific division, such as the energy division.

The display apparatus may output a plurality of operation data candidates based on the estimated total cost. In other words, the operation support apparatus 10, which functions as a cloud server, inputs data on a predetermined range of blast furnace operation specifications into the learning model, and estimates the total cost of the blast furnace division, coke division, energy division, and the like corresponding to each input. Then, based on the estimated total cost, the display apparatus may display the plurality of operation data candidates. The display apparatus may filter a plurality of operation data candidates based on filtering conditions and display the filtered operation data candidates. The filtering conditions may be appropriately set conditions. In other words, the display apparatus may filter from among a plurality of operation data candidates based on the total cost of the blast furnace division, coke division, energy division, and the like, estimated in correspondence with each input of data on blast furnace operation specifications within a predetermined range as inputted into the learning model, and display the filtered operation data candidates. The filtering conditions include, for example, the ranking of the total cost. Specifically, for example, the filtering condition may be the top five ranks in a ranking by total cost. In this way, the display apparatus may display only operation data candidates whose total cost is equal to or higher than a predetermined rank.

In the present embodiment, the case has been described in which the LD gas conditions are outputted from the steelmaking division model and used to calculate the total cost, but this example is not limiting. For example, in the operation support according to the present embodiment, the steelmaking division model may be omitted from the learning model. That is, the operation support apparatus 10 according to the present embodiment may be used in a steelworks having a blast furnace division, a coke division, and an energy division. In this case, the operation support apparatus 10 inputs data on blast furnace operation specifications that have an effect on the energy division and data on the coke amount that has an effect on the energy division into a learning model and estimates the total cost using the learning model, based on the inputted data on the blast furnace operation specifications and the inputted data on the coke amount. The operation support apparatus 10 then outputs the estimated total cost.

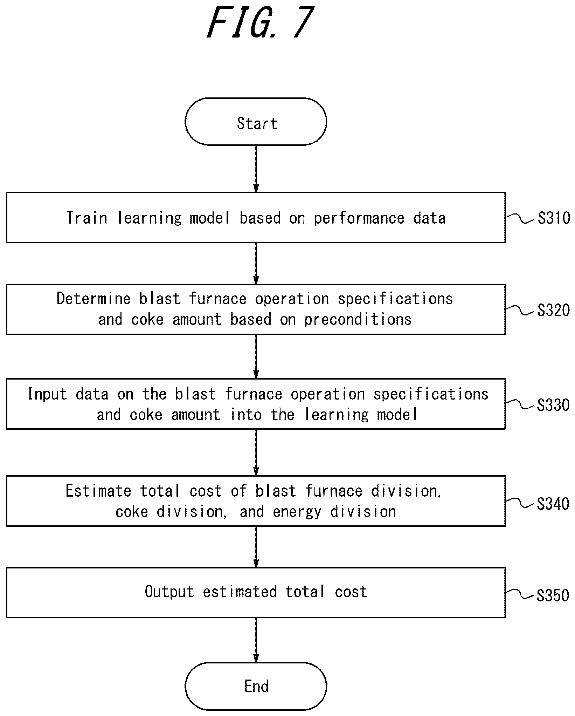

More specifically, the operation support apparatus 10 according to the present embodiment calculates the total cost using three models: a blast furnace division model, a coke division model, and an energy division model. In this case, the learning model includes a blast furnace division model, a coke division model, and an energy division model. The operation support apparatus 10 inputs data on blast furnace operation specifications that have an effect on the energy division into the blast furnace division model and outputs B gas generation conditions and estimated values of hot metal components and hot metal temperature from the blast furnace division model, based on the inputted data on the blast furnace operation specifications. The operation support apparatus 10 also inputs data on the coke amount that has an effect on the energy division into the coke division model and outputs C gas generation conditions from the coke division model, based on the inputted data on the coke amount. The operation support apparatus 10 also inputs the B gas generation conditions and the C gas generation conditions into the energy division model and estimates the total cost based on the inputted B gas generation conditions and the inputted C gas generation conditions, using the energy division model. The operation support apparatus 10 then outputs the estimated total cost. FIG. 7 is a flowchart illustrating an example of a method of supporting operation executed by the operation support apparatus 10 according to the present embodiment in the case in which the steelmaking division model is omitted.

Step S310: the controller 11 of the operation support apparatus 10 trains the learning model based on performance data. Specifically, the controller 11 trains the learning model using performance data including performance values of blast furnace operation specifications, coke amount, and total cost as training data.

Step S320: the controller 11 determines the blast furnace operation specifications and coke amount based on preconditions. The preconditions are set, for example, by user input. Specifically, the controller 11 determines the blast furnace operation specifications using, for example, a lookup table in which the tapping amount and the blast furnace operation specifications are associated with each other.

Step S330: the controller 11 inputs the data on the blast furnace operation specifications and coke amount determined in step S320 into the learning model trained in step S310.

Step S340: the controller 11 estimates the total cost of the blast furnace division, the coke division, and the energy division using the learning model, based on the inputted data on the blast furnace operation specifications and the coke amount. In this estimation process, the above-described preconditions are used. Specifically, the learning model uses the rolling operation plan, coal market conditions, and crude oil market conditions, and estimates the total cost of the blast furnace division, coke division, and energy division based on the inputted data on the blast furnace operating specifications and coke amount.

Step S350: via the output unit 15, the controller 11 outputs the total cost estimated in step S340.

In particular, since the C gas conditions have a large effect on the total cost, the total cost can be estimated with a simpler configuration by using the C gas conditions from the coke division model and omitting the steelmaking division model.

The blast furnace division in the steelworks has been described as including one blast furnace in the present embodiment, but this example is not limiting. The blast furnace division may include a plurality of blast furnaces. In this case, the total hot metal amount may be distributed to the blast furnaces as a hot metal amount, based on the upper and lower limit of productivity for each blast furnace. The blast furnace operation specifications may also be determined for each blast furnace, based on the distributed hot metal amount.

The above-described predetermined constraints may include conditions related to gas permeability in the blast furnace. Gas permeability in the blast furnace division may be determined by the void ratio in the blast furnace. In other words, the predetermined constraints may include a condition related to the void ratio in the blast furnace. A higher void ratio is preferable, since the higher the void ratio, the lower the pressure loss of the reducing agent in the blast furnace. Here, the voids in the blast furnace differ depending on the region within the blast furnace. An upper region, a middle region, and a lower region exist within the blast furnace. The upper region is a region extending downward from the top of the blast furnace by about 10 m. The middle region is a region extending downward from the lower end of the upper region by about 10 m. The lower region is the remaining region downward from the bottom end of the middle region. In the upper region there are solids and gases, namely pig iron and coke, as well as reducing agents. The void ratio of the upper region is determined primarily by the ratio of pig iron to coke, i.e., the coke rate. In the middle and lower regions, liquids, solids, and gases are present, namely pig iron, coke, and reducing agents. The void ratios of the middle and lower regions are determined based on the viscosity of the liquid pig iron component as well as the coke rate. Therefore, in the present embodiment, the void ratio may be determined by the average value of the void ratio of the upper region, the middle region, and the lower region. For example, the operation support apparatus 10 may output only operation data candidates in which the void ratio is equal to or greater than a predetermined value.

The above-described filtering conditions may include conditions related to the gas permeability in the blast furnace. In other words, the filtering conditions may include conditions related to the void ratio in the blast furnace. For example, the display apparatus may output only operation data candidates in which the void ratio is equal to or greater than a predetermined value.

In the operation support technique according to the present embodiment, the inventory amount of coke produced in the coke division may be taken into consideration. In other words, the coke amount may include the coke production amount and the coke inventory amount in the coke division. Here, the coke inventory amount has a lower limit and an upper limit. The lower limit can be determined based on the coke required for continuous operation in a steelworks, for example. On the other hand, the upper limit may be determined by the size of the coke storage area in the steelworks, for example. In particular, if the coke inventory amount falls below the lower limit, it may become necessary to purchase coke from outside, which may have an effect on the operating costs of the steelworks. Therefore, the operation support apparatus 10 may provide operation support based on the total cost that also takes into consideration the coke inventory amount.

The above-described predetermined constraints may include conditions related to the coke amount. That is, the predetermined constraints may include conditions related to the coke production amount and the coke inventory amount in the coke division. As described above, the coke inventory amount has a lower limit and an upper limit. Since the trading price of coke can be high, it is possible to maintain an appropriate coke amount and reduce the total cost by imposing a predetermined constraint on the coke amount.

The relationship between the coke amount and the preconditions will be explained below. The coke consumption in a steelworks is also affected by the preconditions. The coke consumption may be included in the blast furnace operating specifications. For example, when crude steel production is at a high level, almost without exception, the tapping amount and coke consumption will also be at a high level. Therefore, the generated amounts of B gas, C gas, and LD gas also correspondingly increase in a nearly proportional manner. On the other hand, since the rolling process also operates at almost full capacity, electricity consumption will also be at a high level. The gas consumption in a steelworks depends heavily on the tapping amount, the coke production amount, and the operating hours of the rolling mill. Hence, in this case, the gas consumption will also be high. On the other hand, when crude steel production is at a low level, almost all factors will be at a low level. However, the decrease in the electricity consumption and gas consumption in the rolling process does not have as much impact as the decrease in production. Electricity and gas shortages are thus likely to occur. Furthermore, if the decrease in the tapping amount is large and the decrease in the generation of B gas is also large, a gas shortage may occur in a generator that is close to being exclusively fired with B gas. As a result, it may become necessary to purchase more external power than needed. For these reasons, when crude steel production is at a low level, the purchase ratio of externally purchased energy such as electricity, LNG, or heavy oil is likely to increase due to a shortage of by-product gas.

Furthermore, repairing at least some of the coke ovens, i.e., suspending coke operations, leads to a decrease in coke production and a decrease in the amount of C gas generated, regardless of the production level. This often leads to an increase in externally purchased energy due to gas shortages and to a decrease in the coke inventory. When a rolling mill is suspended, it is common to plan for a certain reduction in production volume levels, but even in such a situation, the impact of the zero demand for electricity and gas due to the shutdown of the rolling mill is significant, often resulting in a surplus of by-product gas. This may result in a decrease in externally purchased energy. In some cases, electricity may be sold to the outside.

It is preferable that coke inventory management be performed based on the aforementioned relationship between the coke amount and the preconditions. An example of coke inventory management will now be described.

(First example of coke inventory management)

At a steelworks where the lower limit in terms of coke inventory management is 10,000 t and the upper limit is 80,000 t, the current inventory amount was 15,000 t. The coke ovens were scheduled to be suspended the next month, reducing coke production by 10,000 t. Therefore, it was necessary to restore the inventory amount to at least 20,000 t within the current month. For the current month only, coke was thus bolstered by reducing the coke rate, which is the coke consumption per unit of the tapping amount in the blast furnace. For example, when the tapping amount is 900,000 t/month, a decrease in the coke rate of 6 kg/t can increase the coke inventory by 5,400 t.

(Second example of coke inventory management)

In the above case, the inventory amount can be recovered by increasing the coke production rate in the blast furnace rather than by reducing the coke rate. However, this assumes that the upper limit of coke production has not already been reached.

(Third example of coke inventory management)

In the aforementioned case, the inventory amount can be restored by combining the first and second examples.

(Fourth example of coke inventory management)

At a steelworks where the lower limit in terms of coke inventory management is 10,000 t and the upper limit is 80,000 t, the current inventory amount was 15,000 t. The coke ovens were scheduled to be suspended the month after next, reducing coke production by 20,000 t. The main production plan for the next three months is as follows.

[Table 1]

|  | Current month | Next month | Month after next |
|---|---|---|---|
| Tapping amount | 880,000 tonnes/month | 900,000 tonnes/month | 900,000 tonnes/month |
| Coke production amount | 360,000 +$\alpha$ tonnes/month | 360,000 +$\alpha$ tonnes/month | 340,000 tonnes/month |
| Rolling suspension | yes | no | no |

Assuming that the coke rate is 360 kg/t, the change in coke inventory at the end of the month will be as follows, assuming a coke yield of 90 %.

$$36 \times 0.9 - (88 \times 360/1,000) = +7,200 \text{ t}$$

Similarly, the change in coke inventory for the next month will be $\pm 0$ t, and the change in coke inventory for the month after next will be -18,000 t. Therefore, measures to recover 10,800 t of coke inventory will be necessary. As described in Examples 1 to 3, the coke inventory recovery measures are a reduction in the coke rate, an increase in coke production, or a combination thereof.

According to the production plan, rolling is scheduled to be suspended in the current month. From the perspective of energy supply and demand, it is thought that by-product gas is more likely to be needed in the next month when rolling is not suspended than in the current month when rolling is suspended, so the next month can be considered a desirable period for C gas generation to increase due to increased coke production. On the other hand, from the perspective of blast furnace permeability, it is easier to reduce the coke rate in the current month when tapping is relatively low. From the above, it can be considered desirable from the perspective of overall operational strategy to reduce the coke rate in the current month and increase coke production in the next month.

The production plan is scheduled on a monthly basis in the present embodiment but may be scheduled on the basis of various other lengths of time, such as a weekly basis or a bimonthly basis. In the present embodiment, a first period may be substituted for the current month in which the tapping amount is low. A second period may be substituted for the next month in which the tapping amount is high. The coke rate may be reduced during the first period in which the tapping amount is low, and the coke production may be increased during the second period in which the tapping amount is high.

(Fifth example of coke inventory management)

At a steelworks where the lower limit in terms of coke inventory management is 10,000 t and the upper limit is 80,000 t, the current inventory amount was 60,000 t. A large-scale reduction in the tapping amount is planned for the month after next, with production expected to return to normal over several months thereafter. The main production plan for the next three months is as follows.

[Table 2]

| | Current month | Next month | Month after next |
|---|---|---|---|
| Tapping amount | 900,000 tonnes/month | 900,000 tonnes/month | 750,000 tonnes/month |
| Coke production amount | 360,000 tonnes/month | 360,000 tonnes/month | 360,000 tonnes/month |
| Rolling suspension | no | no | no |

Assuming that the coke rate is 360 kg/t, the amount of surplus coke in the month after next will be:

$$36 \times 0.9 - (75 \times 360/1,000) = +36,000 \text{ t}$$

This means that a coke inventory adjustment of at least 16,000 t will be necessary. After comparing the total costs of two plans, one to reduce coke production for the current month and next month by 9,000 t/month and the other to increase the coke rate for the current month and next month by 10 kg/t, i.e., to use a surplus amount of 9,000 t/month, the latter was selected.

In other words, the coke rate may be increased in a case in which the cost of increasing the coke rate to adjust the coke inventory amount is less than the cost of decreasing the coke production amount. Conversely, the coke production amount may be decreased in a case in which the cost of decreasing the coke production amount to adjust the coke inventory amount is less than the cost of increasing the coke rate.

(Sixth example of coke inventory management)

At steelworks A, where the lower limit in terms of coke inventory management is 10,000 t and the upper limit is 80,000 t, the current inventory amount has fallen to 15,000 t. According to the production plan for the current month, even at the upper limit of coke production, there will still be a shortage of coke, and it is expected that the amount will fall to 7,000 t by the end of the month. The blast furnace has poor conditions such as permeability, making it impossible to reduce the coke rate. If things continue as they are, the purchase of expensive coke from the outside may be unavoidable. On the other hand, at steelworks B, where the lower limit in terms of coke inventory management is 10,000 t and the upper limit is 100,000 t, the inventory has remained stable at around 40,000 t, and there is still room to increase coke production. Therefore, it was decided to reduce the purchase of coke from the outside by increasing coke production at steelworks B by 10,000 t/month and transporting the coke to steelworks A.

In other words, in a case in which, at a steelworks that is the target of operation support, the coke inventory amount cannot be restored by reducing a coke rate and increasing the coke production amount, coke may be transported from another steelworks to restore the coke inventory amount.

(Seventh example of coke inventory management)

At steelworks A, where the lower limit in terms of coke inventory management is 10,000 t and the upper limit is 80,000 t, the current inventory amount has fallen to 15,000 t. According to the production plan for the current month, even at the upper limit of coke production, there will still be a shortage of coke, and it is expected that the amount will fall to 7,000 t by the end of the month. The blast furnace has poor conditions such as permeability, making it impossible to reduce the coke rate. If things continue as they are, the purchase of expensive coke from the outside may be unavoidable.

On the other hand, at steelworks B, where the lower limit in terms of coke inventory management is 15,000 t and the upper limit is 100,000 t, the inventory has remained stable at around 40,000 t, and there is still room to increase coke production. Furthermore, at steelworks C, where the lower limit in terms of coke inventory management is 8,000 t and the upper limit is 60,000 t, the inventory has remained stable at around 30,000 t, and there is still room to increase coke production. In order to restore coke inventory at steelworks A, transportation of coke from steelworks B or steelworks C was considered. Due to conditions such as distance and location, transportation costs were lower for steelworks B than steelworks C, but when comparing costs related to energy supply and demand within the steelworks, transportation costs were higher for steelworks B than steelworks C. After considering all of these factors, it was decided to transport coke from steelworks C to steelworks A.

In other words, when other steelworks that can transport coke to a steelworks that is the target of operation support include a first steelworks and a second steelworks, even in a case in which the cost of transporting coke from the first steelworks is higher than the cost of transporting coke from the second steelworks, coke may be transported from the first steelworks in a case in which the cost associated with energy supply and demand within the first steelworks is lower than the cost associated with energy supply and demand within the second steelworks.

While the present disclosure has been described with reference to the drawings and examples, it should be noted that various modifications and revisions may be implemented by those skilled in the art based on the present disclosure. Accordingly, such modifications and revisions are included within the scope of the present disclosure. For example, functions or the like included in each means, each step, or the like can be rearranged without logical inconsistency, and a plurality of means, steps, or the like can be combined into one or divided.

REFERENCE SIGNS LIST

| | |
|---|---|
| 10 | Operation support apparatus |
| 11 | Controller |
| 12 | Memory |
| 13 | Communication unit |
| 14 | Input unit |
| 15 | Output unit |
| 100 | Blast furnace division model |
| 110 | Blast furnace operation model |
| 120 | Hot air oven model |
| 200 | Steelmaking division model |
| 300 | Coke division model |
| 400 | Energy division model |
| 410 | Utility balance logic |

**Claims**

1. A method of supporting operation, the method to be executed by an information processing apparatus and to be used in a steelworks including a blast furnace division, a coke division, and an energy division, the method comprising:

   inputting data on blast furnace operation specifications that have an effect on the energy division and data on a coke amount that has an effect on the energy division into a learning model;
   estimating a total cost using the learning model, based on the inputted data on the blast furnace operation specifications and the inputted data on the coke amount; and
   outputting the estimated total cost, wherein
   the learning model is a model trained using performance data including performance values of blast furnace operation specifications, coke amount, and total cost.

2. The method of supporting operation according to claim 1, wherein

   the learning model includes a blast furnace division model, a coke division model, and an energy division model, and
   the method comprises:

inputting data on blast furnace operation specifications that have an effect on the energy division into the blast furnace division model;

outputting B gas generation conditions and estimated values of hot metal components and hot metal temperature from the blast furnace division model, based on the inputted data on blast furnace operation specifications;

inputting data on a coke amount that has an effect on the energy division into the coke division model;

outputting C gas generation conditions from the coke division model, based on the inputted coke amount data;

inputting the B gas generation conditions and the C gas generation conditions into the energy division model, and estimating the total cost based on the inputted B gas generation conditions and the inputted C gas generation conditions, using the energy division model; and

outputting the estimated total cost.

3.  The method of supporting operation according to claim 2, wherein

the steelworks further includes a steelmaking division, the learning model further includes a steelmaking division model, and the method further comprises:

inputting an estimated value of hot metal components, an estimated value of hot metal temperature, and a pig iron ratio into the steelmaking division model to determine LD gas generation conditions of the steelmaking division; and

inputting the B gas generation conditions, the LD gas generation conditions, and the C gas generation conditions into the energy division model and outputting the total cost from the energy division model based on the inputted B gas generation conditions, the inputted LD gas generation conditions, and the inputted C gas generation conditions.

4.  The method of supporting operation according to claim 3, wherein the pig iron ratio is determined based on a crude steel amount, a type of steel, and a main unit price.

5.  The method of supporting operation according to any one of claims 1 to 4, wherein

the blast furnace division includes a plurality of blast furnaces,

a total hot metal amount is distributed to the blast furnaces as a hot metal amount, based on an upper and lower limit of productivity for each blast furnace, and

the data on the blast furnace operation specifications is determined for each blast furnace, based on the distributed hot metal amount.

6.  The method of supporting operation according to claim 3, wherein

the learning model further estimates carbon dioxide emissions of the blast furnace division, the steelmaking division, the coke division, and the energy division based on the inputted data on the blast furnace operation specifications, the coke amount, and the pig iron ratio, and

outputs the estimated carbon dioxide emissions.

7.  The method of supporting operation according to any one of claims 1 to 6, wherein the total cost includes a cost equivalent to carbon dioxide emissions.

8.  The method of supporting operation according to any one of claims 1 to 7, wherein the blast furnace operation specifications that have an effect on the energy division include reducing agent specifications and blast specifications.

9.  The method of supporting operation according to claim 8, wherein

the reducing agent specifications include a coke rate and a pulverized coal rate, and

the blast specifications include blast moisture, blast temperature, and blast oxygen concentration.

10. The method of supporting operation according to claim 9, wherein the reducing agent specifications include a composition and a carbon content of coke.

11. The method of supporting operation according to claim 1, comprising:

inputting data on a predetermined range of blast furnace operation specifications into the learning model, and estimating the total cost of the blast furnace division, the coke division, and the energy division corresponding to each input; and

outputting a plurality of operation data candidates based on the estimated total cost.

12. The method of supporting operation according to claim 11, wherein the total cost pertaining to the plurality of operation data candidates satisfies a predetermined standard.

13. The method of supporting operation according to claim 11 or 12, wherein the plurality of operation data candidates satisfies a predetermined constraint.

14. The method of supporting operation according to claim 13, wherein the predetermined constraint includes a constraint on the coke amount.

15. The method of supporting operation according to any one of claims 1 to 14, wherein the coke amount includes a coke production amount and a coke inventory amount in the coke division.

16. The method of supporting operation according to claim 15, wherein the coke inventory amount is restored by reducing a coke rate.

17. The method of supporting operation according to claim 15 or 16, wherein the coke inventory amount is restored by increasing the coke production amount.

18. The method of supporting operation according to claim 15, wherein in a period including a first period and a second period in which a tapping amount in the blast furnace division is greater than in the first period, the coke inventory amount is restored by reducing a coke rate in the first period and increasing a coke production amount in the second period.

19. The method of supporting operation according to claim 15, wherein a coke rate is increased in a case in which a cost of increasing the coke rate to adjust the coke inventory amount is less than a cost of decreasing a coke production amount.

20. The method of supporting operation according to claim 15, wherein in a case in which the coke inventory amount cannot be restored by reducing a coke rate and increasing a coke production amount, coke is transported from another steelworks to restore the coke inventory amount.

21. The method of supporting operation according to claim 20, wherein the other steelworks includes a first steelworks and a second steelworks, and

even in a case in which a cost of transporting coke from the first steelworks is higher than a cost of transporting coke from the second steelworks, coke is transported from the first steelworks to restore the coke inventory in a case in which a cost associated with energy supply and demand within the first steelworks is lower than a cost associated with energy supply and demand within the second steelworks.

22. An operation support apparatus in a steelworks including a blast furnace division, a coke division, and an energy division, the operation support apparatus comprising a controller, wherein
the controller is configured to:

input data on blast furnace operation specifications that have an effect on the energy division and data on a coke amount that has an effect on the energy division into a learning model pertaining to the steelworks;
estimate a total cost using the learning model, based on the inputted data on the blast furnace operation specifications and the inputted data on the coke amount; and
output the estimated total cost, wherein
the learning model is a model trained using performance data including performance values of blast furnace operation specifications, coke amount, and total cost.

23. A display apparatus configured to display an output of an operation support apparatus comprising a controller in a steelworks including a blast furnace division, a coke division, and an energy division, wherein

the display apparatus is configured to display a total cost estimated by the controller of the operation support apparatus using a learning model pertaining to the steelworks, based on data on blast furnace operation specifications that have an effect on the energy division and data on a coke amount that has an effect on the energy division, and

the learning model is a model trained using performance data including performance values of blast furnace operation specifications, coke amount, and total cost.

24. The display apparatus according to claim 23, wherein based on the total cost of the blast furnace division, the coke division, and the energy division estimated in correspondence with each input, into the learning model, of data on blast furnace operation specifications within a predetermined range, the display apparatus is configured to filter a plurality of operation data candidates and display the filtered operation data candidates.

25. An operation support program, to be executed by an information processing apparatus, for a steelworks including a blast furnace division, a coke division, and an energy division, the program being configured to cause a computer to execute operations comprising:

inputting data on blast furnace operation specifications that have an effect on the energy division and data on a coke amount that has an effect on the energy division into a learning model pertaining to the steelworks;
estimating a total cost using the learning model, based on the inputted data on the blast furnace operation specifications and the inputted data on the coke amount; and
outputting the estimated total cost, wherein
the learning model is a model trained using performance data including performance values of blast furnace operation specifications, coke amount, and total cost.

# *FIG. 1*

10

Operation support apparatus

| Controller | 11 |

| Memory | 12 |

| Communication unit | 13 |

| Input unit | 14 |

| Output unit | 15 |

# *FIG. 2*

```
        ┌──────────────┐
        │    Start      │
        └──────┬───────┘
               │
               ▼
┌──────────────────────────────────────────┐
│  Train the learning model using performance data  │─── S100
└──────────────────┬───────────────────────┘
                   │
                   ▼
┌──────────────────────────────────────────┐
│  Determine blast furnace operation specifications,  │─── S110
│  coke amount, and pig iron ratio based on preconditions │
└──────────────────┬───────────────────────┘
                   │
                   ▼
┌──────────────────────────────────────────┐
│  Input data on the blast furnace operation specifications,  │─── S120
│  coke amount, and pig iron ratio into the learning model │
└──────────────────┬───────────────────────┘
                   │
                   ▼
┌──────────────────────────────────────────┐
│  Estimate total cost of blast furnace division,  │─── S130
│  steelmaking division, coke division, and energy division │
└──────────────────┬───────────────────────┘
                   │
                   ▼
┌──────────────────────────────────────────┐
│         Output estimated total cost        │─── S140
└──────────────────┬───────────────────────┘
                   │
                   ▼
        ┌──────────────┐
        │     End       │
        └──────────────┘
```

# FIG. 3

EP 4 726 616 A1

# FIG. 4

```
        ┌─────────────┐
        │    Start     │
        └─────────────┘
               │
               ▼
┌─────────────────────────────────────────────────┐
│  Determine base conditions based on preconditions │      S210
└─────────────────────────────────────────────────┘
               │
               ▼
┌─────────────────────────────────────────────────┐
│  Input data on the blast furnace operation        │
│  specifications, coke amount, and pig iron        │      S220
│  ratio within a predetermined range into the      │
│  learning model                                   │
└─────────────────────────────────────────────────┘
               │
               ▼
┌─────────────────────────────────────────────────┐
│  Estimate total cost of blast furnace division,   │
│  steelmaking division, coke division,             │      S230
│  and energy division corresponding to each input  │
└─────────────────────────────────────────────────┘
               │
               ▼
┌─────────────────────────────────────────────────┐
│  Output a plurality of operation data candidates  │      S240
└─────────────────────────────────────────────────┘
               │
               ▼
        ┌─────────────┐
        │     End      │
        └─────────────┘
```

FIG. 5

# FIG. 6

| Precondition | | | | Overall cost merit (million yen/month) | | | | | |
|---|---|---|---|---|---|---|---|---|---|
| Rolling operation plan | Coke unit price | Crude oil market conditions | Productivity | Case I | Case II | Case III | Case IV | Case V | Case VI |
| A | Normal | Normal | 2.0 | 4 | 7 | 10 | 11 | 13 | 2 |
| A | Normal | Normal | 2.3 | 3 | 6 | 10 | 9 | 13 | 4 |
| B | Normal | Normal | 2.3 | 2 | −1 | 2 | 1 | 3 | 3 |
| B | Normal | Normal | 2.0 | 4 | 8 | 5 | 11 | 9 | −3 |
| B | Normal | Escalating | 2.0 | 3 | 8 | 4 | 12 | 7 | −4 |
| B | Escalating | Escalating | 2.0 | 9 | 2 | −2 | 12 | 7 | −4 |

# FIG. 7

```
          ┌─────────────┐
          │    Start     │
          └─────────────┘
                 │
                 ▼
┌──────────────────────────────────────────────┐
│  Train learning model based on performance data │───── S310
└──────────────────────────────────────────────┘
                 │
                 ▼
┌──────────────────────────────────────────────┐
│  Determine blast furnace operation specifications │───── S320
│     and coke amount based on preconditions      │
└──────────────────────────────────────────────┘
                 │
                 ▼
┌──────────────────────────────────────────────┐
│  Input data on the blast furnace operation specifications │───── S330
│     and coke amount into the learning model     │
└──────────────────────────────────────────────┘
                 │
                 ▼
┌──────────────────────────────────────────────┐
│  Estimate total cost of blast furnace division,  │───── S340
│     coke division, and energy division          │
└──────────────────────────────────────────────┘
                 │
                 ▼
┌──────────────────────────────────────────────┐
│           Output estimated total cost            │───── S350
└──────────────────────────────────────────────┘
                 │
                 ▼
          ┌─────────────┐
          │     End      │
          └─────────────┘
```

## INTERNATIONAL SEARCH REPORT

| International application No. |
|---|
| **PCT/JP2024/032431** |

| A. | CLASSIFICATION OF SUBJECT MATTER |
|---|---|

*G06Q 50/04*(2012.01)i; *C21B 7/00*(2006.01)i; *C21C 5/30*(2006.01)i
FI:    G06Q50/04; C21B7/00 312; C21C5/30 Z

According to International Patent Classification (IPC) or to both national classification and IPC

| B. | FIELDS SEARCHED |
|---|---|

Minimum documentation searched (classification system followed by classification symbols)

G06Q50/04; C21B7/00; C21C5/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2005-55997 A (NIPPON STEEL CORPORATION) 03 March 2005 (2005-03-03) paragraphs [0003], [0005]-[0006], [0009]-[0020], fig. 2 | 1-14, 22-25 |
| A | | 15-21 |
| Y | JP 2002-167612 A (KAWASAKI STEEL CORP.) 11 June 2002 (2002-06-11) paragraphs [0007]-[0008], [0013], [0015]-[0016] | 1-14, 22-25 |
| Y | JP 2022-6742 A (KABUSHIKI KAISHA KOBE SEIKO SHO) 13 January 2022 (2022-01-13) paragraph [0032] | 6-10 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 October 2024** | **12 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/032431**

| Patent document cited in search report | | | Publication date (day/month/year) | Patent family member(s) | Publication date (day/month/year) |
|---|---|---|---|---|---|
| JP | 2005-55997 | A | 03 March 2005 | (Family: none) | |
| JP | 2002-167612 | A | 11 June 2002 | (Family: none) | |
| JP | 2022-6742 | A | 13 January 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005055997 A